# EUROPEAN PATENT APPLICATION

(11) **EP 1 321 435 A1**
(43) Date of publication of application: **25.06.2003**
(21) Application number: 02425573.9
(22) Date of filing: 23.09.2002
(51) Int. Cl.: C02F 11/12

(54) **Process to dry sludge**

(30) Priority: 19.10.2001 IT RM20010625
(71) Applicant: Francis Bacon Società a Responsabilità Limitata, 00125 (Acilia) Rome (IT)
(72) Inventor: De Bellis, Giuseppe Augusto Nicola, (IT)

(57) **Abstract**

The present invention describes a process to chemical sludge treatment and drying by using a fluid bed under a nitrogenous environment. The process described in the present invention permits to manufacturer a device based on a drying chamber where nitrogen is a fluid bed used as a contact surface to dry a sludge and separate evaporating solvent from solid waste. In addition a separation technology is required with a cyclone and filter systems. The resulting device, termed recuperator, will require only routine maintenance since the thermal energy exchange between fluid bed and sludge, is instantaneous. The fluid bed temperature is 40°C ÷ 60°C over boiling point of the mostly abundant solvent content in the sludge and its instantaneous evaporation will transform the sludge in a dry powder. As a matter of fact the decreased contact between sludge and mechanical part of device guarantee that wear well.

## Description

### Field of the invention

The present invention relates to chemical sludge treatment with the recovery of the retained solvent by using a fluid bed technology. More in particular the invention describes the process and a device to compact chemical sludge.

### STATE OF ART:

### Background of the invention

Processes to dry sludge are based on the principle to use a device where there is a surface contacting the substance to be processed. Independently from chemical content of treated sludge, the exchanging surface has localized in a hot chamber supporting the solvent evaporation. Ameliorated proceeding introduced the use of hot nitrogen in the dryer chamber since nitrogen is an inert gas, it is safe because reduces the inflammation risks of the firebox.

Exposing the sludge to hot surface, under a nitrogenous environment, some sludge components became volatilizable by evaporation with the effect to separate a solvent from a dry waste powder. This latter will deposit on surface of the firebox where partially could be recovered by using a cyclone. Remarkably the present invention relates a new process ameliorating the safety of firebox, preserving the device and reducing its routine maintenance. Moreover the sludge volume has strongly decreased and solvent could be recovered.

The principle of the process being the use of nitrogen directly as contact surface!

Solvents and chemical intermediate molecules of industrial processes are toxic pollutant which treatment is a serious environmental problem having a high industrial cost.

The management of toxic substances and waste has high relevance in several processes such as chemical synthesis, pharmaceutical preparations where the solvent volumes are on the order of several litres.

More in particular the recycling of the solvents present in the sludge is a big problem requiring filtration, spin, and physic-chemical separation. Often the mixture of solvent and waste make a fastidious and voluminous sludge from which solvent may be distilled.

To recovery solvents, traditional sludge dryer has an evaporator equipped with a scraper which frequently requires maintenance.

This type of recuperator is limited by sedimentation of those substances that are not volatile on the blades of the scraper. Although functioning after several hours of work some sediments are gummies and blades scraper results stalled.

The dryers must be stopped to clean the chamber. Dryed gummies sludge are a pollutant which can be only burned.

The process described in the present invention shows two advantages respect than traditional process:
1) The liquid sludge directly became a solid substance without the intermediate gummy phase.
2) There are not warming surfaces avoiding furs since nitrogen exchange the hot.

### Detailed description of the invention

A process to dry sludge and solvents recovering, at high yield, has been developed which use a combustion chamber where the surface displayed to dry waste is nitrogen in a physical-chemical state of fluid bed.

The process described in the present invention permit to construct a dryer machine having high value in treatment and management of waste from industrial process and recycling of solvents.

Relative to previously known process, the claimed invention generates little waste and permits a facile approach to solvent recovery.

In the application, unless specifically stated otherwise, the following definition apply:
- In the present invention "process" is the instructions to perform with a right device the sludge drying and solvent recycling.
- In the present invention "drying" is a process to reduce the volume of the sludge fluid because the liquid content evaporates.
- In the present invention "recuperator" is a device to recovery the solvent present in to the sludge.
- The "sludge", treatable with the process described in the present invention, is a waste in a chemical-physic state of liquid from every industrial process.
- The "waste", in the present inventions, is a fluid, from every industrial process, containing solids and solvents which are special toxic pollutant.
- Cyclone is device to separation via centrifuge strength.

The principle of the process is that the nitrogenous fluid bed exchange instantaneously thermal energy with the sludge.

The firebox is constantly at a temperature of 40°C ÷ 60°C over the boiling point of the chemical compounds forming the sludge, including solvents.

The bed temperature is 20°C 40°C over to evaporation temperature of the injected solvent. Instantaneous mixture evaporation transform the sludge in a dry powder fine grained.

More in particular the nitrogen fluid bed must have a right speed so that the powder has dragged to cyclone where there is a centrifuged to separate the powder and the volatile solvent.

A bed of inert bodies having fine grain which fluidity has obtained with a hot nitrogen stream. Optimal temperature will range from 120°C up to 160°C.

The treated sludge has injected in to fluid bed where instantaneous heating transform the sludge in a spongy solid very light. These spongy bodies have dragged by hot nitrogen to a separation system (cyclones and filters).

Some heavy particles might remain inside the chamber where they have further subjected to friction of the inert particles up to reduce their grain and density so that can be dragged to separation system. Solid bodies entrapped into cyclones can be easy managed has normal pollutant.

Hot nitrogen is mixed to evaporated solvent and can be sent to a cooling system and its condensation permit the solvent recycling.

A recuperator and sludge dryer processing under conditions described in the present invention can operate in continuous.

The inert materials in the fluid bed used to sludge crushing will have a right features of hardness but enough to does not disrupt the nitrogen reservoir.

Useful materials are silica, calcium carbonate, dolomite. The grain particles might range among 0,25-0,5-1 mm.

The speed of nitrogen should take in account the bed sliding section of the bed and the section of rest bed must be opportunely oversized. In the fluid bed the solid particles dragging should be limited and dried sludge dragging must be finished.

With this aim the chamber overhanging the fluid bed has a variable section obtained by using septa. The speed can range among 0,5 up to 2 m/s in the flowingly zone and from 0,25 up to 1 m/s in the zone at rest.

### Figure description

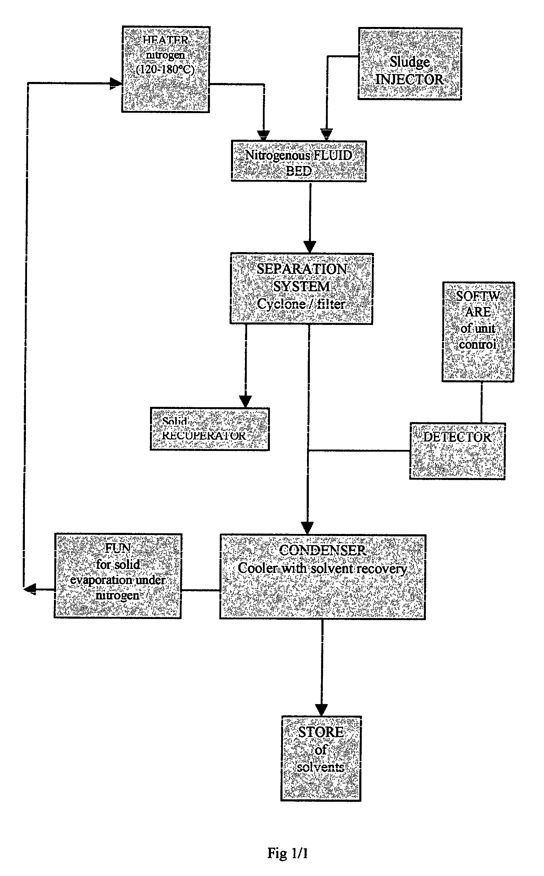

The figure 1/1 (Fig1/1) show a flow chart of a process and the part according to should be construct a recuperating dryer. The heater temperature has according to requirement as described in the present invention.

### Example 1

In a typical process a sludge is a product from a chemical synthesis of pharmaceutical drug. The sludge is a mixture soaked of organic solvent containing the chemical molecules such as synthetic intermediates.

The solvents are not water miscible and they are compatible with the chemical properties of the synthesised drug. A typical sludge volume may be of about 25000 litres, containing from 30% up to 70% of solid part and several solvent molecules as ethyl acetate, n-hexene, toluol, methylene cloride, aceton and other.

A sludge cake derived from a previous process might have a weight of several hundred kilos generally 40% of total weight. In this condition waste compactness and solvent recycle have great economical and environmental importance.

The waste product according to the present process is a safe substance which fate does not require to be ashesed.

The sludge is injected in a device obtaining according to the present invention and it has a configuration showed in figure 1/1.

## Claims

1. A process to dry sludge, including the instruction to manufacture a dyer according to fig1/1, based on a fluid bed, a primary separator being a cyclone, a secondary separator being a filter, a condenser and an inert gas fun.

2. A process to dry sludge using part of process according to claim 1

3. A process according to claim 1 where every sludge is not gaseous waste sodden of chemical solvents.

4. A process according to claim 1 where the inert body can be silica, calcium carbonate, dolomite or phosphates.

5. A process according to claims 1, 2, 3, 4 where the bed temperature has keep among 20°C-40°C over the evaporation point of the injected solvent.

6. A process according to claims 1, 2, 3, 4, 5 where the temperature of the nitrogen stream in the fluid bed ranges among 40°C up to 160 °C.

7. A process according to claims 1, 2, 3, 4, 5, 6where the sludge temperature has keep from 40°C up to 60°C over the evaporation temperature of the substances forming the sludge.

8. A process according to claims 1, 2, 3, 4, 5, 6, 7 where the grain size range can be 0,25mm, 0,5 mm or 1 mm.

9. A process according to claims 1, 2, 3, 4, 5, 6, 7, 8 where the separators can be at high efficiency or at low efficiency but with a exchanger a traditional sheaf tuber to evaporation of the solvent.

10. A process according to claims 1, 2, 3, 4, 5, 6, 7, 8, 9 where a nitrogen distribution inside fluid bed can be a perforated sheet or a distribution grill or a bell-shaped distribution.
